(19) **Europäisches Patentamt / European Patent Office / Office européen des brevets**

(11) **EP 4 160 176 B1**

(12) # EUROPEAN PATENT SPECIFICATION

(45) Date of publication and mention
of the grant of the patent:
**01.07.2026 Bulletin 2026/27**

(21) Application number: **21811749.7**

(22) Date of filing: **27.05.2021**

(51) International Patent Classification (IPC):
**G01M 7/02** *(2006.01)*    **G05D 19/02** *(2006.01)*
**G01N 29/14** *(2006.01)*    **G01M 7/06** *(2006.01)*
**G01H 1/00** *(2006.01)*    **G01N 29/44** *(2006.01)*
**G01M 17/007** *(2006.01)*

(52) Cooperative Patent Classification (CPC):
**G01N 29/14; G01H 1/00; G01M 7/022; G01M 7/06;**
**G01M 17/007; G01N 29/4472; G01N 29/449;**
**G05D 19/02;** G01H 1/003

(86) International application number:
**PCT/ES2021/070381**

(87) International publication number:
**WO 2021/240040 (02.12.2021 Gazette 2021/48)**

(54) **SYSTEM FOR SYNTHESISING AND CONTROLLING MULTIVARIATE RANDOM SIGNALS**

SYSTEM ZUR SYNTHESE UND STEUERUNG MULTIVARIATER ZUFALLSSIGNALE

SYSTÈME DE SYNTHÈSE ET DE COMMANDE DE SIGNAUX ALÉATOIRES MULTIVARIÉS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.05.2020 ES 202030500**

(43) Date of publication of application:
**05.04.2023 Bulletin 2023/14**

(73) Proprietors:
• **Universidad de Vigo**
**36310 Vigo (ES)**
• **Fundación para la Promoción de la Innovación,**
**Investigación y Desarrollo Tecnológico en la**
**Industria de Automoción de Galicia**
**36400 O Porriño (Pontevedra) (ES)**

(72) Inventors:
• **LÓPEZ VALCARCE, Roberto**
**36310 Vigo (ES)**
• **GONZÁLEZ FIGUEROA, Damián**
**36400 O Porriño (Pontevedra) (ES)**

(74) Representative: **Clarke, Modet y Cía., S.L.**
**C/ Suero de Quiñones 34-36**
**28002 Madrid (ES)**

(56) References cited:
**WO-A1-2006/017086**    **WO-A1-2010/141341**
**CN-A- 106 546 400**    **JP-A- 2013 088 125**
**JP-A- 2018 004 504**    **JP-A- 2018 021 781**
**US-A- 3 710 082**    **US-A- 5 012 428**
**US-A1- 2013 231 878**    **US-A1- 2014 129 030**

• ZHENG RONGHUI ET AL: "Multiple-input multiple-output non-stationary non-Gaussian random vibration control by inverse system method", MECHANICAL SYSTEMS AND SIGNAL PROCESSING, vol. 124, 20 December 2018 (2018-12-20), pages 124 - 141, XP085612572, ISSN: 0888-3270, DOI: 10.1016/ J.YMSSP.2019.01.055

• ZHENG RONGHUI ET AL: "Multi-exciter stationary non-Gaussian random vibration test with time domain randomization", MECHANICAL SYSTEMS AND SIGNAL PROCESSING, vol. 122, 6 February 2019 (2019-02-06), pages 103 - 116, XP085582166, ISSN: 0888-3270, DOI: 10.1016/ J.YMSSP.2018.12.013

**Description**

**FIELD OF THE INVENTION**

The present invention aims at the synthesis and control of Gaussian and non-Gaussian multivariate random signals and their application in the field of acoustic and vibration tests for motor vehicle components. However, its use is not limited to this technological sector, being usable in other areas of the art in which the synthesis and control of non-Gaussian multivariate random signals are a requirement for the performance of tests.

**BACKGROUND OF THE INVENTION**

The synthesis and control of random signals is widely used in the automotive sector with the purpose of reproducing in the laboratory the vibratory environment of the vehicle. Currently, the use of univariate or monoaxial systems is widespread, which allow the synthesis and control of one-dimensional stationary signals in a single space direction. The synthesis and control system generates a signal which is transmitted to a power amplifier which, after amplifying the signal, transmits it to an electrodynamic or electrohydraulic actuator which converts it into a movement. This movement is recorded by an accelerometer resulting in a control signal being transmitted back to the synthesis and control system. It adjusts its output signal to compensate for distortions introduced by the amplifier and the actuator so that the control signal meets a target power spectral density (PSD).

With regard to the statistical distribution of its amplitudes, the signals generated by the synthesis and control system can be classified as Gaussian (patents US3710082A and US5012428A) or non-Gaussian. In the latter case, it is possible to adjust the parameter of the distribution of amplitudes called kurtosis, so that the probability of high amplitudes with respect to a Gaussian process is increased or reduced. To achieve this variation of kurtosis, different methods can be employed, such as the inclusion of filtered shot noise (patent US7426426B2), the generation of an auxiliary spectrum associated with the non-Gaussian part of the signal (US20100305886A1 patent) or by manipulation of the signal phase (patents US20130231878A1 and JP5421971B2). In the first and second methods, alteration of kurtosis produces an unwanted distortion of the power spectral density, which must be corrected. In the case of signal phase manipulation, the power spectral density is not affected, which represents an advantage from the point of view of signal synthesis and control, whose objective is the synthesis of signals with a given power density as well as a given kurtosis.

The synthesis and control systems of univariate or monoaxial random signals have as their main disadvantage the fact that they do not completely represent the real environment of the vehicle, which presents movements in several directions of the space simultaneously. This implies that a random signal synthesis and control system must be multivariate or multiaxial to adequately reproduce the vehicle environment. Unlike univariate or monoaxial systems, multivariate or multiaxial systems synthesize and control multiple signals that are transmitted to one or more power amplifiers, which are connected to a set of electrodynamic or electrohydraulic actuators that transform those signals into movements in several directions of space simultaneously. These movements are captured by a set of accelerometers, resulting in several control signals being transmitted to the synthesis and control system, where they are used to adjust their corresponding output signals so as to compensate for the distortions introduced by the amplifiers and actuators. Unlike monoaxial systems, multiaxial systems seek to adjust a power spectral density matrix (SDM) rather than a power spectral density (PSD). The element of row *n* and column m of said matrix corresponds to the power cross-spectrum between the components n and m of the multivariate signal.

In [1], M. Shinozuka presents a method for the synthesis of random multivariate signals, although general signals necessarily have a Gaussian distribution. In [2], DO. Smallwood and T.L. Paez propose a method for the synthesis of multivariate Gaussian random signals that operates in the frequency domain. In [3], DO. Smallwood proposes an improvement to the previous method that allows the synthesis of multivariate and non-Gaussian random signals, based on the application of a Zero-memory nonlinear (ZMNL) transformation. This method has the disadvantage of distorting the spectrum of the output signals, which reduces the dynamic range of a possible control system based on this method. In [4], P. Borgnat, P. Abry, and P. Flandrin describe a method for the synthesis of non-Gaussian multiaxial random signals that adjust to a determined joint probability density function. This is an iterative method conceptually similar to those based on the application of Zero-memory nonlinear transformations, in which a Gaussian random signal is started to which a transformation that makes it non-Gaussian is applied, with the exception that in this case the method ensures that the SDM of the process corresponds to the target, so there is no distortion at the spectral level. Multivariate random signal synthesis methods are described in [1]-[4], but at no time is their control treated in a closed loop. In [5] and [6], and also in [7], [8] and [9] R. Zheng, H. Chen, and X. He propose a method for the synthesis and control of multivariate and non-Gaussian random signals, based on the application of the Zero-memory nonlinear (ZMNL) transformation method of a Gaussian process. The adjustment of the kurtosis of the non-Gaussian process is achieved by an iterative process in which the phase of the output signal is successively modified by this nonlinear transformation. The resulting distortion is avoided by forcing the modulus of the Fourier coefficients of the power spectral density matrix (SDM) to the target value, although adjusting the kurtosis necessarily requires an iterative process in which the ZMNL transformation is modified.

References:

[1] Masanobu Shinozuka. Simulation of multivariate and multidimensional random processes. The Journal of the Acoustical Society of America, 49(1B):357-368,1971.

[2] DO Smallwood and Thomas L Paez. A frequency domain method for the generation of partially coherent normal stationary time domain signals. Shock and Vibration, 1(1):45-53, 1993.

[3] DO Smallwood. Generation of partially coherent stationary time histories with non-gaussian distributions. Technical report, Sandia National Labs., Albuquerque, NM (United States), 1996.

[4] P. Borgnat, P. Abry, and P. Flandrin. Using surrogates and optimal transport for synthesis of stationary multivariate series with prescribed covariance function and non-gaussian joint-distribution. In Acoustics, Speech and Signal Processing (ICASSP), 2012 IEEE International Conference on, pages 3729-3732, March 2012.

[5] Ronghui Zheng, Huaihai Chen, and Xudong He. Control method for multi-input multi-output non-gaussian random vibration test with cross spectra consideration. Chinese Journal of Aeronautics, 30(6):1895-1906, 2017.

[6] Ronghui Zheng, Huaihai Chen, and Xudong He. Control method for multiple-input multiple-output non-gaussian random vibration test. Packaging Technology and Science, 30(7):331-345, 2017.

[7] Zheng, R., Chen, H., Vandepitte, D., & Luo, Z. (2019). Multi-exciter stationary non-Gaussian random vibration test with time domain randomization. Mechanical systems and signal processing, 122, 103-116.

[8] Zheng, R., Chen, H., He, X., & Vandepitte, D. (2019). Multiple-input multiple-output non-stationary non-Gaussian random vibration control by inverse system method. Mechanical Systems and Signal Processing, 124, 124-141.

[9] CN106546400A, A kind of multiple-input and multiple-output non-gaussian random vibration test system and test method.

## DESCRIPTION OF THE INVENTION

The present invention proposes as a novelty the synthesis and control of non-Gaussian multivariate random signals by manipulating the phase of the signals without the need for a Zero-memory nonlinear transformation or an iterative method of adjusting said transformation. To do this, the phase components of the process are generated randomly and are adjusted by varying the parameters of a random phase generator. The synthesized signals can be used to generate vibrations in a multiaxial vibration machine or can be recorded for later use, such as input signal in numerical simulations, for example. By proper control of the generated command signals it is possible to adjust the power spectral density matrix (SDM) and the kurtosis of the control signals measured on the vibration table or on the test specimen. The signals generated are random, that is, it is not possible to predict deterministically the value of the signal at each instant of time, but it varies based on a set of statistical distributions. These signals can represent different types of vibratory processes common in the transport and automotive industry, such as road rolling, rail travel or the flight of rockets among others.

A multiaxial vibration machine is a set of hydraulic or electrodynamic actuators attached to a mobile platform (vibration table) with the ability to generate movement in several directions of space simultaneously and in a wide range of frequencies. The directions of movement that are generated will depend on the arrangement of the actuators and the design of the mobile platform, and can be two (biaxial system), three (triaxial system) or an arbitrarily high number of directions (multiaxial system). For a multiaxial vibration machine with a hexapod or Stewart platform configuration, up to six degrees of freedom can be achieved, corresponding to longitudinal, lateral, vertical, pitch, roll and yaw movement. Other systems with more degrees of freedom are possible.

This type of vibration systems can reproduce multiple types of signals, such as sinusoidal signals, temporary signals recorded in the field or random type signals, among others. The present invention addresses the synthesis and control of multivariate random signals.

To control the movement of this type of system, a multiaxial signal synthesis and control system is necessary. This system aims to synthesize and adjust a set of control signals so that the resulting command signals have the values of kurtosis and a user-defined SDM, compensating for the possible distortions caused by the different elements of the vibration system.

The multivariate random signal synthesis and control system according to claim 1 generates as many command signals as degrees of freedom the multiaxial vibration system has. The command signals are a set of random signals with a power spectral density matrix (SDM) and a given kurtosis. These signals are sent to the power amplifiers or to a specific secondary control system of the multiaxial vibration system, which in turn generate the excitation signals used to cause the movement of the actuators. The movement produced is measured with a set of sensors located on the vibration table or on the test specimen mounted thereon, resulting in control signals that are transmitted to the multivariate random signal synthesis and control system. All the elements located between the outputs of the synthesis and control system and its inputs integrate what is commonly called the 'plant'. The control signals are used to modify the command signals until the desired SDM and kurtosis setpoint is reached, compensating for the distortion introduced by the plant.

The present invention proposes as a novel solution the adjustment of the individual kurtosis of the control signals by varying the synthesis parameters of a set of random number generators, without such adjustment affecting the SDM. The system has as many random number generators as it has command signals. The random number sequences are used to calculate the phase of each of the control signals at each frequency, so that the kurtosis of the control signals adjust to the user-defined target. The SDM of the control signals is adjusted by an equalization process that is calculated considering the user-defined target matrix and the distortion introduced by the plant, integrated among others by the power amplifier, the multiaxial vibration machine, the test specimen and the sensors used to measure the control signals. This SDM equalization process is independent of the kurtosis adjustment process.

The proposed solution avoids the need to apply a nonlinear transformation function without memory and the use of an iterative process to adjust said transformation function, since the kurtosis adjustment method does not affect the SDM of the process. This leads to a simplification of the system and reduction of the computational cost when synthesizing and controlling the signals.

The multivariate random signal synthesis and control system is not limited in the number of degrees of freedom it can control, although it is necessary that the number of control signals be greater than or equal to the number of degrees of freedom to be controlled.

## BRIEF DESCRIPTION OF THE DRAWINGS

The invention is described below in a series of figures which help to understand the same and which expressly relate to an implementation of said invention, which is presented as a non-limiting example thereof, and in which it is represented:

Figure 1 shows a general block diagram including the multiaxial vibration machine and the sensors that measure the control signals.

Figure 2 shows a block diagram of the multivariate signal synthesis and control system.

Figure 3 shows a block diagram of the non-Gaussian random signal synthesizer.

Figure 4 shows a block diagram of the random phase generator.

Figure 5 shows a block diagram of the kurtosis control system.

Figure 6 shows a possible implementation of the multivariate random signal synthesis and control device.

## DESCRIPTION OF A PREFERRED EMBODIMENT OF THE INVENTION

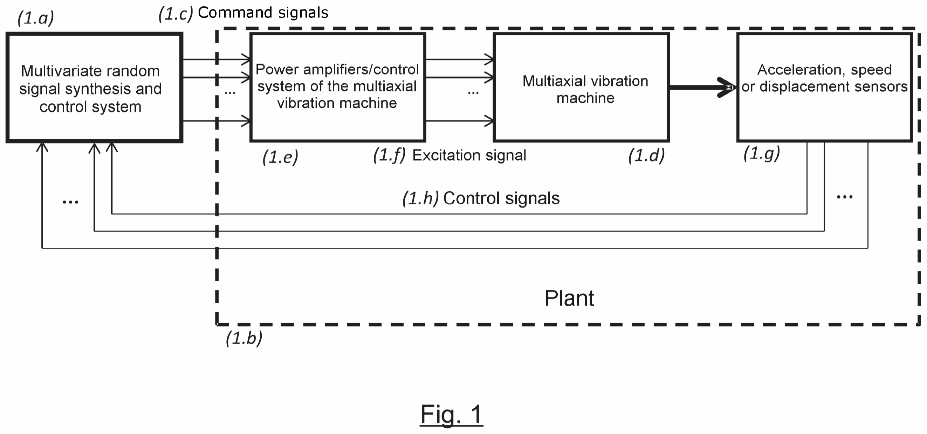

Figure 1 shows the multivariate random signal synthesis and control system (1.a) and its connection to the plant (1.b). The synthesis and control system sends through its output channels as many command signals (1.c) as degrees of freedom desired to be controlled in the vibration machine (1.d). Command signals are voltage signals that are transmitted by a set of cables to the power amplifiers or to a specific control system of the multiaxial vibration machine (1.e), which generates high-power excitation signals (1.f) that are used to move the actuators of the multiaxial vibration machine (1.d). The acceleration, speed or displacement sensors (1.g) located on the multiaxial vibration machine or on the test specimen measure the movement generated in their different degrees of freedom, and transmit the control signals (1.h) through a set of cables to the input channels of the multivariable random signal synthesis and control system (1.a). This system analyzes the control signals and corrects the synthesized command signals (1.c) accordingly until the received control signals adjust to the power spectral density (SDM) and kurtosis matrix setpoint, thus closing the control loop.

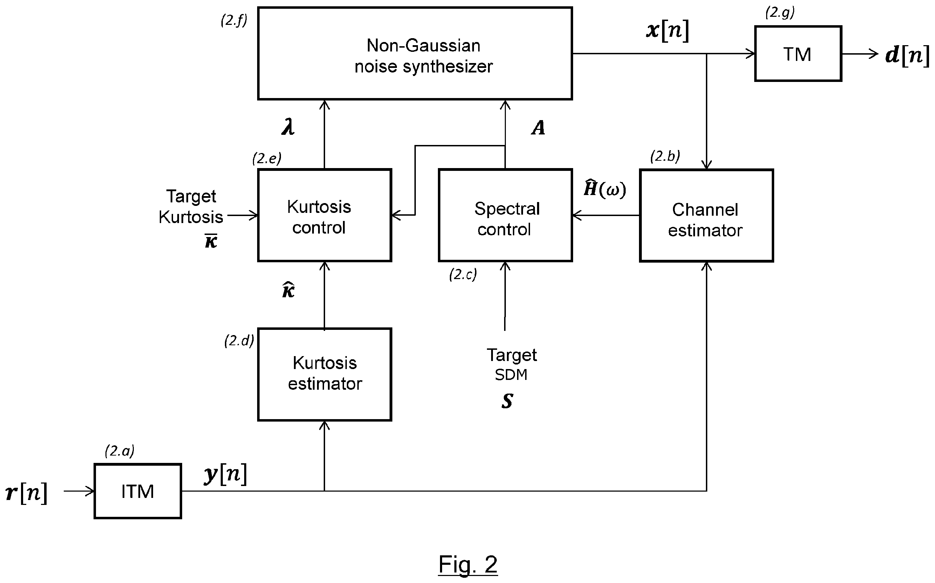

Figure 2 shows an operation diagram of the multivariate random signal synthesis and control system. The user defines as input parameters the spectral density matrix of target power $S_k$, for $k = 0, 1, \dots , N - 1$ N being the number of spectral lines defined by the user; and the desired kurtosis vector $\overline{\kappa}$ for the degrees of freedom of the system. Generally, for a system with $P$ degrees of freedom the kurtosis vector $\overline{\kappa}$ will be a vector of size $P$, while the power spectral density matrix $S_k$ will be a matrix of size $P \times P$ for each spectral line defined by the user and corresponding to the frequency index $k$. For each spectral line, the power spectral density matrix must possess Hermitian symmetry, so that $S_k$ it is equal to its conjugate transpose, and $S_k$ must also be positive semi-defined to constitute a valid SDM.

The control signals $r[n]$ are initially passed to the reverse transformation module ITM (2.a), which converts the set of $Q$ control signals $r[n]$ to a maximum of $P$ signals $y[n]$, corresponding to the different degrees of freedom that are desired to be controlled, so that $Q \geq P$. To do this, it multiplies the set of Q control signals by a transformation matrix, defined by the user based on the arrangement and orientation of the sensors used to measure the movement generated by the multiaxial vibration machine [10]. The resulting signals $y[n]$ pass to the channel estimator (2.b), which uses both the transformed control signals $y[n]$ and the control signals $x[n]$ sent to the plant to estimate the plant transfer function matrix $\hat{H}_k$, which is a matrix of size $Q$ x $P$, for each user-defined spectral line and corresponding to the frequency index $k$. There are multiple algorithms available for the realization of said estimation, among which is the one obtained from Welch spectral estimation method. The estimated plant transfer function matrix is used in the spectral control module (2.c) to modify the power spectral density matrix and compensate for the distortion introduced by the plant. The equalized SDM matrix $\tilde{S}_k$ is obtained by applying for each frequency index $k$ the expression

$$\tilde{S}_k = [\hat{H}_k]^{\#} S_k ([\hat{H}_k]^{\#})^H, \qquad (1)$$

where $[\hat{H}_k]^{\#}$ denotes the pseudoinverse of the plant transfer function matrix corresponding to the frequency index $k$, $([\hat{H}_k]^{\#})^H$ denotes the transposed and conjugated matrix of $([\hat{H}_k]^{\#})$, and $S_k$ the target SDM introduced by the user for the frequency index $k$.

For each frequency index $k = 0, 1,...,N$-1, to $\tilde{S}_k$ a factorization is applied giving rise to another matrix $A_k$ of size $P$ x $P$, which is used as the target matrix for the synthesis of the equalized control signal. In general, any decomposition of the type $\tilde{S}_k = A_k A_k^H$ will be valid.

$$\tilde{S}_k = A_k A_k^H \qquad (2)$$

Cholesky decompositions or in eigenvalues and eigenvectors (EVD) are examples that meet equation (4) and are therefore valid decompositions. In the first case the matrix $A_k$ is directly the Cholesky factor, which is lower triangular. If the EVD is used, the resulting factorization is as given in expression (3):

$$\tilde{S}_k = W_k D_k W_k^H, \qquad (3)$$

so that the columns of the matrix $W_k$ of size $P$ x $P$ are the eigenvectors corresponding to the eigenvalues collected in the non-negative diagonal matrix $D_k$ of size $P$ x $P$. The matrix $A_k$ is in such a case given by

$$A_k = W_k D_k^{1/2}, \qquad (4)$$

being $D_k^{1/2}$ a diagonal matrix whose elements are given by the square root of the $D_k$.

The matrices $A_k$, $k = 0, 1,...,N$-1, are used both for the synthesis of the command signals in the non-Gaussian noise synthesizer (2.f) and for the adjustment of the kurtosis in the open loop in the kurtosis control module (2.e).

The kurtosis estimation module (2.d) estimates the value of this statistic for each of the P degrees of freedom of the transformed control signal $y[n]$, grouping them into the vector $\hat{\kappa}$. The kurtosis control module calculates the kurtosis control parameter $\lambda$ being used in the non-Gaussian noise synthesizer. This parameter is a vector with as many elements as degrees of freedom $P$ has the command signal. For its calculation you can use the target kurtosis value $\bar{\kappa}$ indicated by the user and the estimated kurtosis value $\hat{\kappa}$ when operating in closed loop, or the value of the target kurtosis $\bar{\kappa}$ and the matrices $A_k$, $k = 0, 1, ..., N$-1 calculated from the target SDM and the plant transfer function when only a record of the synthesized signal is desired. The use of some parameters or others will depend on the choice of the user.

With the kurtosis $\lambda$ and matrix control parameter $A_k$, the command signals are synthesized in the non-Gaussian noise synthesizer (2.f) $x[n]$. In general, as many command signals as degrees of freedom $P$ the multiaxial vibration machine has will be generated. In certain cases it may be necessary to transform the command signals before they are sent to the plant. This occurs, for example, in the case where several actuators work together in the same degree of freedom, or the arrangement of the actuators generates couplings between the different degrees of freedom. These signals are transferred to the transformation matrix **TM** module (2.g) that allows transforming the set of command signals from a user-defined matrix, which considers the location and orientation of the different actuators in the multiaxial vibration machine. From this module come the transformed command signals $d[n]$, which are either transmitted to the plant for the purpose of generating the movement; or they are recorded for later use.

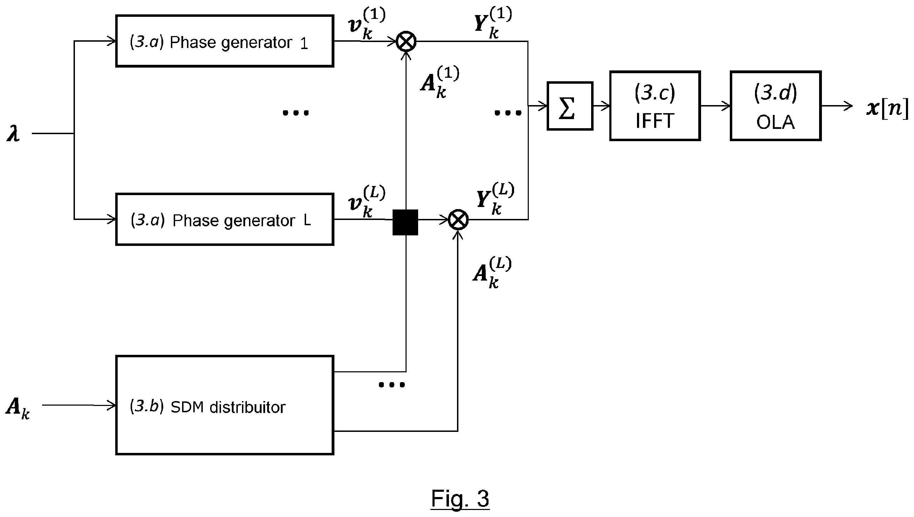

Figure 3 illustrates the block diagram of the non-Gaussian noise synthesizer. The synthesis is based on the generation of a set of $L$ components independent of each other. The generation of $L$ components ensures that each synthesized signal block can have up to *L* signal peaks, allowing for further adjustment of the statistical distribution of the synthesized signal beyond its kurtosis value. From the kurtosis control parameter $\lambda$, and for each frequency index **k = 0, 1, ..., N - 1**, the random phase *P*-dimensional vectors $v_k^{(i)}$, $i = 1, ..., L$ are generated. For each frequency index k and each component *i*, the random phase vector $v_k^{(i)}$ has *P* elements (as many as degrees of freedom as the command signal has). The number of components *L* can be specified manually by the user or can be automatically determined by the system. In the latter case, the number of components *L* will be the largest number that allows to reach the desired kurtosis value.

The random phase vector $v_k^{(i)}$ corresponding to component *i* and spectral line *k* is multiplied by the matrix $A_k^{(i)}$. For each spectral line k, the matrices $A_k^{(i)}$, i = 1,...,L, are obtained by distributing the energy of the SDM between the L components. The distribution of energy between the different components can be carried out based on multiple criteria, provided that the condition is met.

$$\sum_{i=1}^{L} A_k^{(i)} \left( A_k^{(i)} \right)^H = A_k A_k^H \qquad (5)$$

The distribution of energy can be deterministic or be performed randomly. As an example and without limitation, one possibility is to make an equal distribution between the *L* components, so that for each *i* = 1. ... .L, there is

$$A_k^{(i)} = \frac{1}{\sqrt{L}} A_k. \qquad (6)$$

Each phase vector $v_k^{(i)}$ is multiplied by its corresponding matrix $A_k^{(i)}$, thus obtaining the L vectors of complex coefficients $Y_k^{(i)}$ according to the expression (7):

$$Y_k^{(i)} = A_k^{(i)} v_k^{(i)}. \qquad (7)$$

For each spectral line *k*, the *L* vectors of complex coefficients $Y_k^{(i)}, 1, ..., L$ are added according to the expression (8):

$$Y_k = \sum_{i=1}^{L} Y_k^{(i)},$$
$$(8)$$

as a step prior to calculating the inverse fast Fourier transform (IFFT, 3.c) according to expression (9):

$$y[n] = \sum_{k=0}^{N-1} Y_k e^{j\frac{2\pi}{N}kn}, \quad n = 0, 1, ..., N - 1. \qquad (9)$$

**The vectors *y*[*n*]** generated by the expression (9), and which take complex values in general, therefore have *P* components and constitute a block of *N* multivariate temporal signal samples. Both the real part and the imaginary part of said block have an SDM corresponding to the equalized SDM given by the expression (1), as well as a kurtosis that adjust to the target value $\overline{\kappa}$. Each new synthesized block is passed to the overlap-add module (OLA, 3.d) that deals with applying this technique, which is common in synthesis systems, to concatenate the successive blocks and generate an arbitrarily long length signal. As a result, the command signals x[n] are synthesized.

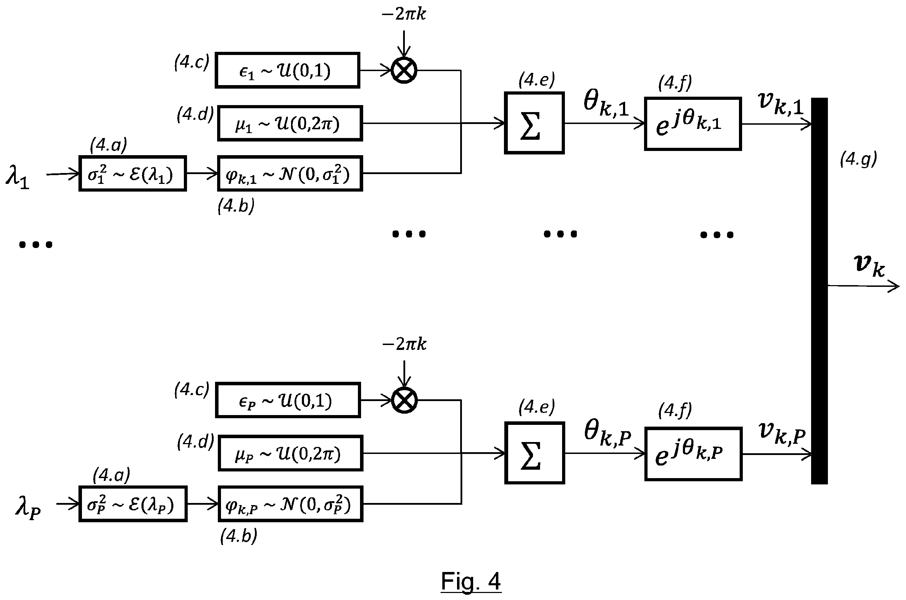

The control of kurtosis is carried out by the appropriate generation of the phase vectors $v_k^{(i)}$, in the phase generators. The objective of these generators is to reduce the phase difference between the frequency components so that a constructive interference occurs between them and an increase in the peak level of the signal occurs. This ultimately results in an increase in kurtosis. By altering the parameters of the different random number generators, the degree of alignment between the different frequency components and, therefore, the level of kurtosis can be controlled. As an example and without limitation, Figure 4 shows a possible implementation of these phase generators. The kurtosis control vector $\lambda$ consists of a total of $P$ elements, that is, as many degrees of freedom as desired to control. For each of these degrees of freedom, the parameter $\lambda_i$, $i = 1,...,P$, controls a random number generator with exponential distribution (4.a), which produces a random number for each signal block. The random value thus generated is used as a variance parameter of a second random number generator with normal distribution (4.b), while the average of this second generator remains constant and equal to zero. The normal random number generator (4.b) generates the numbers $\boldsymbol{\varphi}_k^{(i)}$, with $N$ $k = 1, ... , N$, being the number of spectral lines defined by the user. A third random number generator (4.c) generates a value $\varepsilon^{(i)}$ for each block, with a uniform distribution between the values 0 and 1, being multiplied by a coefficient $-\boldsymbol{2\pi k}$ dependent on the frequency term $k$. This term $-\boldsymbol{2\pi k}\varepsilon^{(i)}$ has the effect of a random displacement of the highest amplitude peak of the signal block generated in the synthesizer. Without its use, the peak of greater amplitude would tend to always be located in the first samples of the block giving rise to a periodic process, which is not desirable in practice. The generator (4.d) generates a random number $\mu^{(i)}$ for each block, with a uniform distribution between 0 and $\boldsymbol{2\pi}$. The outputs of the three random generators are combined in (4.e) giving rise to the end of phase $\boldsymbol{\theta}_k^{(i)} = \boldsymbol{\mu}^{(i)} - \boldsymbol{2\pi k\epsilon}^{(i)} + \boldsymbol{\varphi}_k^{(i)}$. Thus, the phase vectors $\boldsymbol{v}_k^{(i)}$ are obtained according to the expression (10):

$$v_k^{(i)} = e^{j\theta_k^{(i)}}, \qquad\qquad (10)$$

and are finally integrated (4.g) into the vector $\boldsymbol{v_k}$ with $P$ values for each frequency index k.

As evidenced, the adjustment of the kurtosis does not require any type of non-linear transformation, but is achieved by modifying the parameters of the random number generators with exponential distribution. As shown in this description, the adjustment of the kurtosis does not affect the matrices $\boldsymbol{A_k}$ that define the spectral characteristic of the process. Therefore, any change in kurtosis will not affect the SDM of the generated process, which avoids the need for an iterative internal loop.

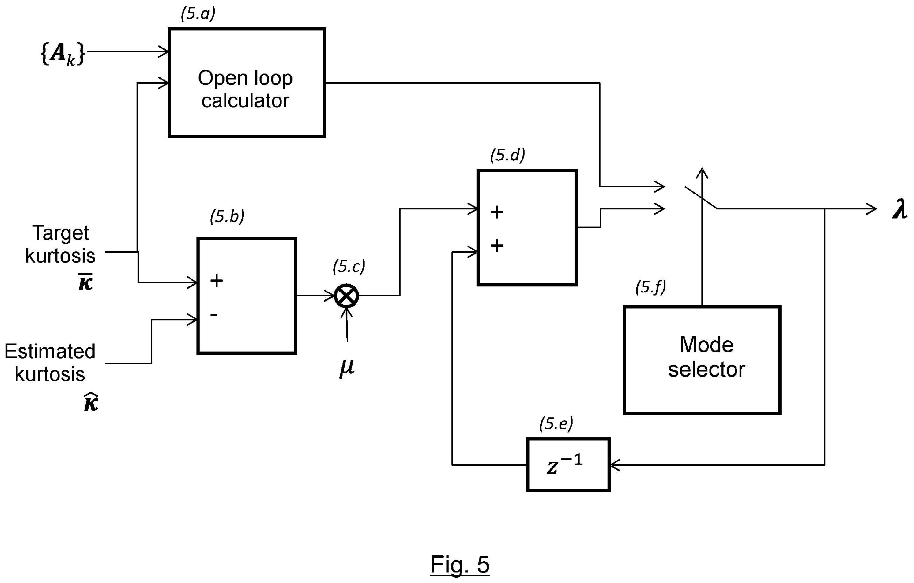

The kurtosis control vector $\lambda$ is calculated in the kurtosis control module. This module can operate in two different modes, at the choice of the user. In closed loop mode, the system adjusts the kurtosis control vector $\lambda$ only based on the target kurtosis values $\overline{\kappa}$ and the estimated kurtosis values $\hat{\kappa}$ from the transformed control signal $\boldsymbol{y[n]}$. As an example and without limitation, the value of the control vector can be calculated as shown in Figure 5: by means of the summer (5.d), to the previous value of the control vector, stored in the register (5.e) a term proportional to the difference between the target $\overline{\kappa}$ and estimated kurtosis vectors $\hat{\kappa}$ calculated in block (5.b) is added, as shown in equation (11):

$$\lambda^{(j+1)} = \lambda^{(j)} + \mu(\overline{\kappa} - \hat{\kappa}), \qquad\qquad (11)$$

where $\mu$ is an adjustable convergence factor.

In the other possible mode of operation, consisting of the open loop operation, an open loop calculator (5.a) deals with the calculation of the kurtosis control vector based on the target kurtosis $\overline{\kappa}$ and the matrices $\boldsymbol{A_k}$ dependent on the target SDM. The relationship between the target kurtosis $\overline{\kappa}$, the matrices $\boldsymbol{A_k}$ and the kurtosis control vector is given by the expression (12):

$$\overline{\kappa} = \overline{C}_0 \boldsymbol{1} + \overline{C}_2 \gamma_2 + \overline{C}_3 \gamma_3, \qquad\qquad (12)$$

in which the symbol $\boldsymbol{1}$ represents a vector of size P in which all its components are equal to 1; the vectors $\gamma_2$ and $\gamma_3$ are given by the expression (13):

$$\boldsymbol{\gamma_n} \triangleq \begin{bmatrix} \dfrac{\lambda_1}{\lambda_1 + n} & \dfrac{\lambda_2}{\lambda_2 + n} & \cdots & \dfrac{\lambda_P}{\lambda_P + n} \end{bmatrix}^T, \quad \boldsymbol{n = 2, 3}, \quad (13)$$

in which the superscript $T$ indicates transposition, and the parameter $\lambda_i$, $i = 1,... , P$, is the $i$-th component of the kurtosis control vector $\lambda$; the matrices $\overline{C}_0$, $\overline{C}_2$, $\overline{C}_3$ of size $P \times P$ are given through their elements in row $i$ and column s by the expression (14):

$$\overline{C}_n(i,s) \triangleq \frac{C_n(i,s)}{\left(\sum_{t=1}^{P}\sum_{k=0}^{M-1}|A_k(i,t)|^2\right)^2}, \quad n = 0,2,3, \quad (14)$$

where

$$C_0(i,s) = -\sum_{k=0}^{M-1}|A_k(i,s)|^4, \quad (15)$$

$$C_2(i,s) = \sum_{p,k,q} A_{p+k-q}^*(i,s)A_p(i,s)A_k(i,s)A_q^*(i,s) - 2\left(\sum_{k=0}^{M-1}|A_k(i,s)|^2\right)^2$$

$$+3\sum_{k=0}^{M-1}|A_k(i,s)|^4 - 2\mathrm{Re}\{\sum_{k,q}A_k^2(i,s)A_{2k-q}^*(i,s)A_q^*(i,s)\}, \quad (16)$$

$$C_3(i,s) = 2\sum_{k=0}^{M-1}\sum_{q=0}^{M-1}\mathrm{Re}\{A_k^2(i,s)A_{2k-q}^*(i,s)A_q^*(i,s)\} - 2\sum_{\ell=0}^{M-1}|A_\ell(i,s)|^4, \quad (17)$$

where $A_k(i, s)$ is the element located in row i and column s of the matrix $\boldsymbol{A}_k$.

Equation (12) constitutes a non-linear relationship expressing the target kurtosis $\overline{\kappa}$ as a function of the control parameters $\lambda$ and matrices $\boldsymbol{A}_k$ corresponding to the decomposition of the SDM given in expression (2). In general, the relationship (12) can be solved numerically to obtain the values of $\lambda$, given $\overline{\kappa}$ and matrices $\boldsymbol{A}_k$, it being possible for some types of decomposition to obtain a closed solution. As an example and without limitation, the following expressions show a closed solution for the case of a Cholesky decomposition of the SDM, although other decompositions are applicable, resulting in different expressions: each control parameter $\lambda_i$ is the positive solution of a second degree equation, given in expression (18):

$$a_i\lambda_i^2 + b_i\lambda_i + c_i = 0, \quad i = 1, \dots, P \quad (18)$$

which coefficients are given by the expressions (19), (20) and (21):

$$a_i = \overline{C}_2(i,i) + \overline{C}_3(i,i) + Q_i - \overline{\kappa}_i, \quad (19)$$

$$b_i = 3\overline{C}_2(i,i) + 2\overline{C}_3(i,i) + 5(Q_i - \overline{\kappa}_i), \quad (20)$$

$$c_i = 6(Q_i - \overline{\kappa}_i), \quad (21)$$

being

$$Q_i = \begin{cases} \overline{C}_0(1,1), & i = 1, \\ \sum_{s=1}^{i}\overline{C}_0(i,s) + \sum_{s=1}^{i-1}\overline{C}_2(i,s)\frac{\lambda_s}{\lambda_s+2} + \sum_{s=1}^{i-1}\overline{C}_3(i,s)\frac{\lambda_s}{\lambda_s+3}, & i = 2, \dots, P, \end{cases} \quad (22)$$

and with the terms $\overline{C}_n(i, s)$ given by the expression (14). Note that these terms, and therefore the coefficients $a_i$, $b_i$, $c_i$ in expression (18), depend solely on the matrices $\boldsymbol{A}_k$ and therefore on the SDM. From equations (18) it is possible to calculate the value of the kurtosis control parameters for each degree of freedom $i = 1, \dots, P$ according to expression (23):

$$\lambda_i = \frac{-b_i \pm \sqrt{b_i^2 - 4a_ic_i}}{2a_i}, \quad (23)$$

**which, under** the condition $\lambda_i \geq 0$ that the control parameters must be positive, gives rise to a single valid solution.

Through the open loop operation, it is possible to accurately calculate the kurtosis control vector, providing an exact solution.

In both modes of operation (closed loop or open loop), it is possible to correct the value of the target kurtosis to take into account the possible effect of the parameters used in the WAVE processing module of the non-Gaussian noise synthesizer.

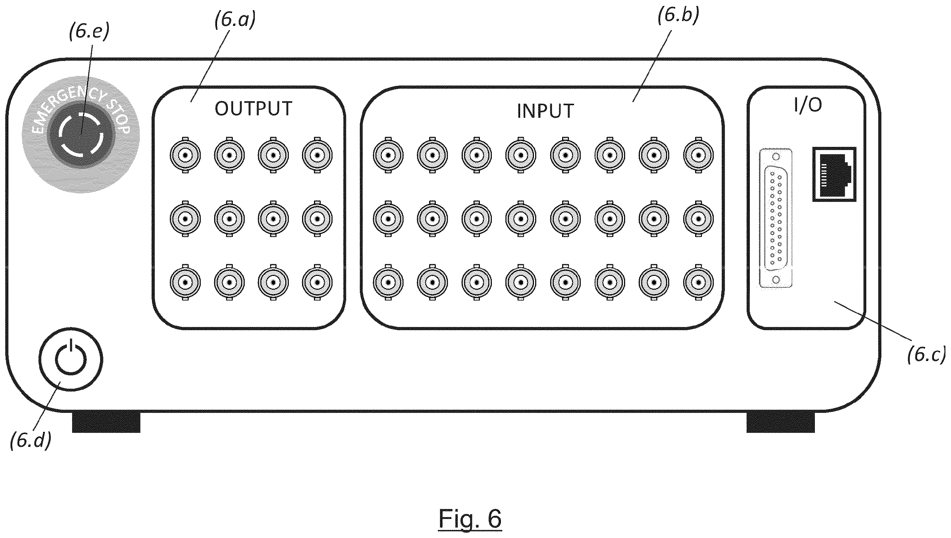

Figure 6 shows a possible implementation of the device, which includes an output module (6.a) to which the inputs to the plant are connected for the transmission of the command signals; an input module (6.b) to which the cables of the sensors used for the measurement of the control signals are connected; a digital communications module (6.c) for the exchange of data to a control computer; an on and off button (6.d) and an emergency stop button (6.e) that causes a controlled stop of the multivariate signal synthesis and control system.

References:

[10] Norman Fitz-Coy, Vivek Nagabhushan, and Michael T Hale. Benefits and challenges of over-actuated excitation systems. Shock and Vibration, 17(3):285-303, 2010.

**Claims**

1. Multivariate random signal synthesis and control system (1.a) **characterized in that** it comprises:

   - an input for receiving a plurality of control signals y[n];
   - an output for generating a plurality of command signals x[n];
   - a channel estimator (2.b) configured to calculate an estimate of a plant transfer function matrix $\hat{H}$ from the plurality of control signals y[n] and the plurality of command signals x[n];
   - a spectral control module (2.c) configured to calculate a spectral matrix $A$ from a target power spectral density matrix $S$ and the estimate of the plant transfer function matrix $\hat{H}$;
   - a kurtosis control module (2.e) configured to calculate a kurtosis control vector $\lambda$ according to a first or to a second mode of operation;

      wherein the first mode of operation is in open loop and the kurtosis control vector $\lambda$ is calculated from a target kurtosis $\overline{\kappa}$ and the spectral matrix $A$,
      wherein the second mode of operation is in closed loop and the kurtosis control vector $\lambda$ is calculated from the target kurtosis $\overline{\kappa}$ and an estimated kurtosis $\hat{\kappa}$, wherein, for the second mode of operation, the multivariate random signal synthesis and control system (1.a) further comprises a kurtosis estimator (2.d) configured to calculate said estimated kurtosis $\hat{\kappa}$ from the control signals y[n];

   - a non-Gaussian noise synthesizer (2.f) configured to generate as many command signals as degrees of freedom are desired according to the spectral matrix $A$ and the kurtosis control vector $\lambda$;
   wherein, the plurality of command signals is recorded for later use according to the first mode of operation;
   wherein, the plurality of command signals is for controlling a multiaxial vibration machine (1.b) of a plant (1.b) according to the second mode of operation.

2. Multivariate random signal synthesis and control system (1.a) according to claim 1, wherein the adjustment of the kurtosis during the synthesis of the command signals (2.f) is carried out by modifying the parameters of the random phase generators (3.a).

3. Multivariate random signal synthesis and control system (1.a) according to any of the preceding claims, wherein the signal energy is distributed among one or several independent components (3.b).

4. Multivariate random signal synthesis and control system (1.a) according to any of the preceding claims, wherein the signal blocks are concatenated by an overlap-add technique to generate arbitrarily long sequences (3.d).

5. Multivariate random signal synthesis and control system (1.a) according to any of the preceding claims, further comprising an inverse transformation matrix module (2.a) that converts the control signals into transformed control signals from a user-defined matrix.

6. Multivariate random signal synthesis and control system (1.a) according to any of the preceding claims, further comprising a matrix module of transformation matrix (2.g) that transforms the command signals generated by the synthesizer into other signals adapted to the configuration of the multiaxial vibration machine.

**Patentansprüche**

1. System zur Synthese und Steuerung multivariater Zufallssignale (1.a), **dadurch gekennzeichnet, dass** es Folgendes umfasst:

   - einen Eingang zum Empfangen einer Vielzahl von Steuersignalen y[n];
   - einen Ausgang zum Generieren einer Vielzahl von Befehlssignalen x[n];
   - einen Kanalschätzer (2.b), der dazu konfiguriert ist, aus der Vielzahl von Steuersignalen y[n] und der Vielzahl von Befehlssignalen x[n] eine Schätzung der Anlagenübertragungsfunktionsmatrix $\hat{H}$ zu berechnen;
   - ein Spektralsteuermodul (2.c), das dazu konfiguriert ist, eine Spektralmatrix $A$ aus einer Ziel-Spektralleistungsdichtematrix S und der Schätzung der Anlagenübertragungsfunktionsmatrix $\hat{H}$ zu berechnen;
   - ein Kurtosis-Steuermodul (2.e), das dazu konfiguriert ist, einen Kurtosis-Steuervektor $A$ gemäß einem ersten oder einem zweiten Betriebsmodus zu berechnen;

      wobei der erste Betriebsmodus im offenen Regelkreis erfolgt und der Kurtosis-Steuervektor $A$ aus einer Zielkurtosis $\overline{K}$ und der Spektralmatrix $A$ berechnet wird,
      wobei der zweite Betriebsmodus im geschlossenen Regelkreis erfolgt und der Kurtosis-Steuervektor $A$ aus der Zielkurtosis $\overline{K}$ und einer geschätzten Kurtosis $\hat{K}$ berechnet wird, wobei für den zweiten Betriebsmodus das System zur Synthese und Steuerung multivariater Zufallssignale (1.a) ferner einen Kurtosis-Schätzer (2.d) umfasst, der dazu konfiguriert ist, die geschätzte Kurtosis $\hat{K}$ aus den Steuersignalen y[n] zu berechnen;

   - einen Synthesizer für nicht-gaußsches Rauschen (2.f), der dazu konfiguriert ist, so viele Befehlssignale zu generieren, wie Freiheitsgrade gemäß der Spektralmatrix $A$ und dem Kurtosis-Steuervektor $A$ gewünscht sind;

   wobei die Vielzahl von Befehlssignalen für die spätere Verwendung gemäß dem ersten Betriebsmodus aufgezeichnet wird; wobei die Vielzahl von Befehlssignalen dazu dient, eine mehrachsige Vibrationsmaschine (1.b) einer Anlage (1.b) gemäß dem zweiten Betriebsmodus zu steuern.

2. System zur Synthese und Steuerung multivariater Zufallssignale (1.a) nach Anspruch 1, wobei die Anpassung der Kurtosis während der Synthese der Befehlssignale (2.f) durch Modifizierung der Parameter der Zufallsphasengeneratoren (3.a) durchgeführt wird.

3. System zur Synthese und Steuerung multivariater Zufallssignale (1.a) nach einem der vorhergehenden Ansprüche, wobei die Signalenergie auf eine oder mehrere unabhängige Komponenten (3.b) verteilt ist.

4. System zur Synthese und Steuerung multivariater Zufallssignale (1.a) nach einem der vorhergehenden Ansprüche, wobei die Signalblöcke mittels einer Überlappungs-Additions-Technik aneinandergereiht werden, um beliebig lange Sequenzen (3.d) zu generieren.

5. System zur Synthese und Steuerung multivariater Zufallssignale (1.a) nach einem der vorhergehenden Ansprüche, ferner umfassend ein inverses Transformationsmatrixmodul (2.a), das die Steuersignale in transformierte Steuersignale aus einer benutzerdefinierten Matrix umwandelt.

6. System zur Synthese und Steuerung multivariater Zufallssignale (1.a) nach einem der vorhergehenden Ansprüche, ferner umfassend ein Matrixmodul einer Transformationsmatrix (2.g), das die vom Synthesizer generierten Befehlssignale in andere Signale umwandelt, die an die Konfiguration der mehrachsigen Vibrationsmaschine angepasst sind.

**Revendications**

1. Système de synthèse et de commande de signaux aléatoires multivariés (1.a), **caractérisé en ce qu'**il comprend :

   - une entrée destinée à recevoir une pluralité de signaux de commande y[n] ;
   - une sortie destinée à générer une pluralité de signaux d'actionnement x[n] ;
   - un estimateur de canal (2.b) configuré pour calculer une estimation d'une matrice de fonction de transfert d'installation $\overline{H}$ à partir de la pluralité de signaux de commande y[n] et de la pluralité de signaux d'actionnement x[n] ;

- un module de commande spectrale (2.c) configuré pour calculer une matrice spectrale $A$ à partir d'une matrice de densité spectrale de puissance cible S et de l'estimation de la matrice de fonction de transfert d'installation $H\overline{\overline{H}}$ ;
- un module de commande du kurtosis (2.e) configuré pour calculer un vecteur de commande du kurtosis $\lambda$ selon un premier ou un second mode de fonctionnement ;

dans lequel le premier mode de fonctionnement est en boucle ouverte et le vecteur de commande du kurtosis $\lambda$ est calculé à partir d'un kurtosis cible $\overline{K}$ et de la matrice spectrale $A$,
dans lequel le second mode de fonctionnement est en boucle fermée et le vecteur de commande du kurtosis $\lambda$ est calculé à partir du kurtosis cible $\overline{K}$ et d'un kurtosis estimé $\hat{K}$, dans lequel, pour le second mode de fonctionnement, le système de synthèse et de commande de signaux aléatoires multivariés (1.a) comprend en outre un estimateur de kurtosis (2.d) configuré pour calculer ledit kurtosis estimé $\overline{K}$ à partir des signaux de commande y[n] ;

- un synthétiseur de bruit non gaussien (2.f) configuré pour générer autant de signaux d'actionnement que de degrés de liberté souhaités selon la matrice spectrale $A$ et le vecteur de commande du kurtosis $A$ ;

dans lequel la pluralité de signaux d'actionnement est enregistrée pour une utilisation ultérieure selon le premier mode de fonctionnement ; dans lequel la pluralité de signaux d'actionnement est destinée à commander une machine vibratoire multiaxiale (1.b) d'une installation (1.b) selon le second mode de fonctionnement.

2. Système de synthèse et de commande de signaux aléatoires multivariés (1.a) selon la revendication 1, dans lequel l'ajustement du kurtosis pendant la synthèse des signaux d'actionnement (2.f) est effectué par modification des paramètres des générateurs de phase aléatoire (3.a).

3. Système de synthèse et de commande de signaux aléatoires multivariés (1.a) selon l'une quelconque des revendications précédentes, dans lequel l'énergie du signal est répartie entre un ou plusieurs composants indépendants (3.b).

4. Système de synthèse et de commande de signaux aléatoires multivariés (1.a) selon l'une quelconque des revendications précédentes, dans lequel les blocs de signal sont concaténés au moyen d'une technique d'addition avec recouvrement afin de générer des séquences de longueur arbitraire (3.d).

5. Système de synthèse et de commande de signaux aléatoires multivariés (1.a) selon l'une quelconque des revendications précédentes, comprenant en outre un module de matrice de transformation inverse (2.a) qui convertit les signaux de commande en signaux de commande transformés à partir d'une matrice définie par l'utilisateur.

6. Système de synthèse et de commande de signaux aléatoires multivariés (1.a) selon l'une quelconque des revendications précédentes, comprenant en outre un module de matrice de transformation (2.g) qui transforme les signaux d'actionnement générés par le synthétiseur en d'autres signaux adaptés à la configuration de la machine vibratoire multiaxiale.

EP 4 160 176 B1

(1.a)　　　　　(1.c) Command signals

| Multivariate random signal synthesis and control system | ... | Power amplifiers/control system of the multiaxial vibration machine | ... | Multiaxial vibration machine | Acceleration, speed or displacement sensors |

(1.e)　　　　(1.f) Excitation signal　　　(1.d)　　(1.g)

(1.h) Control signals

...

Plant

(1.b)

Fig. 1

Fig. 2

Fig. 3

Fig. 4

Fig. 5

Fig. 6

## REFERENCES CITED IN THE DESCRIPTION

**Patent documents cited in the description**

- US 3710082 A
- US 5012428 A
- US 7426426 B2
- US 20100305886 A1
- US 20130231878 A1
- JP 5421971 B
- CN 106546400 A

**Non-patent literature cited in the description**

- **MASANOBU SHINOZUKA**. Simulation of multivariate and multidimensional random processes. *The Journal of the Acoustical Society of America*, 1971, vol. 49 (1B), 357-368
- **DO SMALLWOOD** ; **THOMAS L PAEZ**. A frequency domain method for the generation of partially coherent normal stationary time domain signals. *Shock and Vibration*, 1993, vol. 1 (1), 45-53
- **DO SMALLWOOD.** Generation of partially coherent stationary time histories with non-gaussian distributions. *Technical report, Sandia National Labs., Albuquerque, NM (United States)*, 1996
- Using surrogates and optimal transport for synthesis of stationary multivariate series with prescribed covariance function and non-gaussian joint-distribution. **P. BORGNAT** ; **P. ABRY** ; **P. FLANDRIN**. In Acoustics, Speech and Signal Processing (ICASSP). IEEE International Conference, March 2012, 3729-3732
- **RONGHUI ZHENG** ; **HUAIHAI CHEN** ; **XUDONG HE**. Control method for multi-input multi-output non-gaussian random vibration test with cross spectra consideration. *Chinese Journal of Aeronautics*, 2017, vol. 30 (6), 1895-1906
- **RONGHUI ZHENG** ; **HUAIHAI CHEN** ; **XUDONG HE**. Control method for multiple-input multiple-output non-gaussian random vibration test. *Packaging Technology and Science*, 2017, vol. 30 (7), 331-345
- **ZHENG, R.** ; **CHEN, H.** ; **VANDEPITTE, D** ; **LUO, Z.** Multi-exciter stationary non-Gaussian random vibration test with time domain randomization. *Mechanical systems and signal processing*, 2019, vol. 122, 103-116
- **ZHENG, R.** ; **CHEN, H** ; **HE, X.** ; **VANDEPITTE, D.** Multiple-input multiple-output non-stationary non-Gaussian random vibration control by inverse system method. *Mechanical Systems and Signal Processing*, 2019, vol. 124, 124-141
- **NORMAN FITZ-COY** ; **VIVEK NAGABHUSHAN** ; **MICHAEL T HALE**. Benefits and challenges of over-actuated excitation systems. *Shock and Vibration*, 2010, vol. 17 (3), 285-303